**Europäisches Patentamt**

**European Patent Office**

**Office européen des brevets**

(19)

(11) Veröffentlichungsnummer : **0 101 900**
**B1**

(12) **EUROPÄISCHE PATENTSCHRIFT**

(45) Veröffentlichungstag der Patentschrift :
**10.02.88**

(51) Int. Cl.⁴ : **C 08 L 27/06**

(21) Anmeldenummer : **83107177.4**

(22) Anmeldetag : **22.07.83**

(54) **Formmassen aus Vinylchloridpolymerisaten, ABS-Polymerisation und polymeren Weichmachern mit hoher Alterungsbeständigkeit.**

(30) Priorität : **04.08.82 DE 3229130**

(43) Veröffentlichungstag der Anmeldung :
**07.03.84 Patentblatt 84/10**

(45) Bekanntmachung des Hinweises auf die Patenterteilung : **10.02.88 Patentblatt 88/06**

(84) Benannte Vertragsstaaten :
**DE FR GB IT SE**

(56) Entgegenhaltungen :
**FR-A- 2 011 501**
**GB-A- 976 360**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Uerdingen, Walter, Dr.**
**Humperdinckstrasse 41**
**D-5090 Leverkusen 1 (DE)**
Erfinder : **Braese, Hans-Eberhard**
**Kaethe-Kollwitz-Strasse 3**
**D-5000 Köln 71 (DE)**
Erfinder : **Lindner, Christian, Dr.**
**Riehlerstrasse 200**
**D-5000 Köln 60 (DE)**
Erfinder : **Ott, Karl-Heinz, Dr.**
**Paul-Klee-Strasse 54**
**D-5090 Leverkusen 1 (DE)**

0 101 900

**Beschreibung**

Die Erfindung betrifft thermoplastische Formmassen zur Herstellung von Folien mit verbessertem Alterungsverhalten auf der Basis von Kompositionen, die Vinylchloridpolymerisate, bestimmte ABS-Polymerisate gegebenenfalls bestimmte harzartige Copolymerzusätze, spezielle Ethylencopolymerisate, spezielle Butadiencopolymerisate und gegebenenfalls kautschukartige Polyesterurethane enthalten.

Vinylchloridpolymerisate, insbesondere Polyvinylchlorid (PVC) stellen weitverbreitete Rohstoffe zur Herstellung verschiedenster Kunststoffartikel dar. Durch Kombination der Vinylchloridpolymerisate mit anderen Stoffen läßt sich bekannterweise das charakteristische Eigenschaftsprofil der Vinylchloridpolymerisate in weiten Bereichen variieren bzw. modifizieren. So eignen sich z. B. nicht oder nur gering modifizierte PVC Formmassen (sogenanntes « Hart PVC ») zur Herstellung von Formkörpern. Diese zeigen ein mittleres Verarbeitungsverhalten, mittlere Wärmeformbeständigkeit bei mäßiger Zähigkeit und relativ niedriger Flexibilität.

Durch Kombination von z. B. Polyvinylchlorid mit sogenannten Weichmachern mit niedrigen bzw. mittleren Molekulargewichten lassen sich Kunststoffartikel herstellen (« Weich-PVC-Typen »), die bei Gebrauchstemperaturen hohe Flexibilität und Elastizität besitzen. Als Weichmacher sind hierfür z. B. Phthalate, Epoxidverbindungen, aliph. Diester, Phosphate, Polyester mit Molekulargewichten bis zu etwa 3 000, Trimellitate, Citrate oder bestimmte aliphatische, gegebenenfalls chlorierte Kohlenwasserstoffe geeignet. Diese Weichmacher sind bekannt (z. B. « Encyclopedia of PVC », Mariel Dekker, INC, New York, 1976).

Kombinationen aus sogenannten polymeren Weichmachern (Polymeren mit höheren Molekulargewichten) mit Vinylchloridpolymerisaten erlauben weiterhin die Herstellung von Weich-PVC-Formkörpern mit verbesserten mechanischen Eigenschaften, z. B. eine verbesserte Abriebfestigkeit, Elastizität, Lösungsmittelbeständigkeit und gegebenenfalls eine bessere Flammfestigkeit. Solche polymeren Weichmacher sind z. B. teilvernetzte Butadien-Acrylnitril-Copolymerisate mit bis zu 30 % Acrylnitril und Mooney-Viskositäten (ML 4, 100 °C, (DIN 53 523) von 60-100, (z. B. EP 0 005 736), bestimmte Polyurethane (DE-PS 1 193 241) sowie spezielle, in organischen Lösungsmitteln lösliche Ethylen-Vinylacetat-Copolymerisate (z. B. EP-A 0 005 736).

Aus der FR-A-2 011 501 sind Formmassen aus syndiotaktischen, kristallinen PVC, Styrol-Harzen, ABS Ökopolymeren und NBR-Kautschuken bekannt. Jedoch sind diese aufgrund ihres Eigenschaftsbildes für bestimmte technische Anwendungen weniger gut brauchbar. Weiterhin sind aus der GB-A-976 360 Mischungen bekannt, die PVC, ABS, Styrol-acrylnitrilcopolymerisate und Butadien-acrylnitrilpolymerisate enthalten können. Jedoch eignen sich diese Massen gut für die Verarbeitung im Zusammenhang mit Treibmitteln.

Durch Kombination beispielsweise von Vinylchloridpolymerisaten mit Pfropfpolymeren (z. B. Styrol, α-Methylstyrol, Acrylnitril und/oder Methylmethacrylat, gepfropft auf kautschukartige Substrate wie Butadienpolymerisate, Acrylatkautschuk) oder Pfropfpolymerisaten (Vinylchlorid gepfropft auf spezielle Ethylen-Vinylacetat-Copolymere mit z. B. 45 % Vinylacetat und 55 % Ethylen) oder durch Kombination mit anderen Polyethylenderivaten, lassen sich Kunststoffblends hoher Kerbschlagzähigkeit herstellen.

Die Kautschukkomponenten der Pfropfpolymermodifikatoren sind vorzugsweise von anderer Natur (i. Vgl. zu einigen der obengenannten Polymerweichmachern) als die Kautschuke, die als Polymerweichmacher eingesetzt werden können. Diese Unterschiede können zum Beispiel durch chemische Zusammensetzung, den Vernetzungscharakteristiken, der Teilchenmorphologie der Pfropfcharakteristik gegeben sein.

Weiterhin kann durch spezielle Modifikatoren, die Wärmestandfestigkeit von Vinylchloridpolymerisaten verbessert werden. Hierfür geeignete Modifikatoren sind z. B. Copolymere des Styrols, α-Methylstyrols, Acrylnitrils und Methylmethacrylats.

Um eine technische Verarbeitung dieser Vielzahl von Polymerkombinationen zu ermöglichen, ist eine wirksame Stabilisierung der Systeme, z. B. gegen thermischen, photolytischen und chemischen Abbau nötig. Als Stabilisatoren und Verarbeitungshilfsmittel eignen sich z. B. Ba/Cd-, Pb-, Sn-, Zn-Stabilisatoren oder organische Stabilisatoren sowie phenolische, gegebenenfalls S- oder P-haltige Antioxidantien, Epoxidverbindungen, Wachse, niedermolekulare und hochmolekulare Gleitmittel. Außerdem sind Additive erforderlich, die die Verarbeitungsbedingungen des jeweiligen Systems optimieren. Solche Hilfsstoffe und deren Verarbeitungsbedingungen werden beispielsweise in « Kunststoff Handbuch » Carl Hanser Verlag, München (1963) beschrieben.

Für spezielle Anwendungen (z. B. als Folie zum Laminieren und Kaschieren) sind Vinylchloridpolymerisate enthaltende Kompositionen mit ganz bestimmtem Anforderungsprofil erforderlich : Kombination von guter Zähigkeit, Bruchfestigkeit, Flexibilität, Elastizität (auch bei tieferen Temperaturen), Wärmestandfestigkeit, Abriebfestigkeit, Haftfestigkeit ; Möglichkeiten der Verarbeitung zu flächenartigen Gebilden durch Extrusion, Kalandrieren, Spritzgießen, Tiefziehen ; Laminierbarkeit mit anderen Materialien. Die Kompositionen sollen außerdem gute Migrationsbeständigkeit, Dimensionsstabilität und spezielle Schrumpfeigenschaften aufweisen. Weiterhin sollen sie eine ästhetische Oberflächenbeschaffenheit besitzen und sich durch spezielle Oberflächenbehandlungsverfahren zu Gebilden mit dekorativem Aussehen verarbeiten lassen. Außerdem wird noch eine komfortable Griffeigenschaft solcher Materialien

2

gefordert.

Dieses komplexe Anforderungsprofil kann durch thermoplastische Verarbeitung z. B. folgender Komposition in bestimmten Mengenverhältnissen erhalten werden :

Vinylchloridpolymerisat (z. B. PVC), Weichmacher mit niedrigem Molekulargewicht (z. B. Doctyladipat, Phthalate), Pfropfpolymerisat (z. B. (ABS)-Pfropfpolymere), Polymerweichmachern (z. B. Butadien-Acrylnitril-Kautschuke) und eine komplexe Zahl von Stabilisatoren für die verschiedenen Komponenten und die Gesamtmischung.

Solche Polymerisatkompositionen besitzen anwendungstechnische Nachteile, welche die Einsatzbreite daraus hergestellter Formkörper (z. B. als Folien) einschränken. Solche Nachteile sind z. B. unbefriedigende Beständigkeit gegen Alterungseinflüsse durch Licht, Wärme, Chemikalien, sonstigen artfremde Medien sowie mögliche chemische Wechselwirkungen der verschiedenen Komponenten miteinander. Diese Alterungen machen sich im Verlust mechanischer und visueller Eigenschaften bemerkbar (Versprödung, Farbtonverschlecherung, Ausschwitzungen etc.).

Es wurde nun gefunden, daß man Folien mit verbesserter Alterungsbeständigkeit aus speziellen thermoplastischen Formmassen herstellen kann, die das oben genannte komplexe anwendungstechnische Anforderungsprofil erfüllen.

Gegenstand der Erfindung sind demnach thermoplastische Formmassen, die bestehen aus :

A) 25-50 Gew.-Teile eines Vinylchloridhomo- oder -copolymerisates

B) 25-50 Gew.-Teile eines Pfropfprodukts, hergestellt durch Pfropfpolymerisation von

1) 30-95 Gew.-Teile eines Monomergemisches aus Styrol, Methylmethacrylat, α-Methylstyrol, einzeln oder in Abmischungen einerseits und Acrylnitril andererseits im Verhältnis 90 : 10 bis 60 : 40, auf einen Kautschuk aus

2) 70-5 Gew.-Teile eines Butadien-Homo- oder -Copolymerisates wobei,

3) der resultierende gepfropfte Kautschuk eine mittlere Teilchengröße von 0,05-5 μ aufweist,

C) 0-10 Gew.-Teile eines harzartigen, thermoplastischen Copolymerisates aus einem Styrol-Acrylnitril- bzw. Methylmethacrylat-Acrylnitril-Copolymeren, das einen Staudinger-Index $[\eta]$, von $\geqslant 3$ vorzugsweise $\geqslant 4$ dl/g, besitzt und dessen Staudinger-Index in jedem Fall über dem des im Grundpolymeren B) enthaltenden Copolymerisates liegt,

D) 5-40 Gew.-Teile eines Ethylen-Vinylacetat- oder eines Ethylen-Acrylester-Copolymerisates oder eines Ethylen-Vinylacetat-Kohlenmonoxid-Terpolymerisates,

E) 3-30 Gew.-Teile einer Butadien-Acrylnitril-Copolymerisat-Kautschukkomponente und gegebenenfalls

F) 0-15 Gew.-Teile eines Polyesterpolyurethans auf der Basis von aliphatischen Polyestern und Polyisocyanaten.

Komponente A enthält mindestens 50 Gew.-% Vinylchlorid.

Wenn in Komponente B Butadien-Copolymerisat verwendet wird, soll dessen Comonomeranteil $\leqslant 35$ Gew.-% sein und der Gelgehalt des Butadien-Copolymerisates $\geqslant 50$ %.

Der Staudinger-Index $[\eta]$ wird in Dimethylformamid bei 25 °C gemessen.

Das Ethylen-Vinylacetat bzw. -Acrylester Copolymerisat der Komponente D hat einen Vinylacetatgehalt von $\geqslant 50$ Gew.-%, das Ethylen-Vinylacetat-Kohlenmonoxid-Terpolymerisat hat einen Vinylacetatgehalt von $\geqslant 20$ Gew.-%. Die jeweils verwendeten Polymerisate haben mittlere Molekulargewichte von mehr als 1 500.

Komponente E hat einen Acrylnitrilgehalt von 10-35 Gew.-% und einen Gelgehalt von $\geqslant 60$ %.

Die Polyester der Komponente F haben Molekulargewichte $\geqslant 600$.

Bevorzugt geeignete Formmassen enthalten 25-50 Gew.-Teile Komponente A), 25-50 Gew.-Teile Komponente B), 1,5-3 Gew.-Teile Komponente C), 15-35 Gew.-Teile Komponente D), 5-20 Gew.-Teile Komponente E) und 1-10 Gew.-Teile Komponente F).

Vinylchloridpolymerisate A) im Sinne der Erfindung sind vorzugsweise Polyvinylchlorid (PVC), Copolymerisate des Vinylchorids mit bis zu 50 Gew.-% copolymerisierbaren Verbindungen, vorzugsweise mit bis zu 20 Gew.-% copolymerisierbaren Verbindungen, sowie Pfropfpolymerisate von Vinylchlorid auf Ethylen-Vinylacetat-Copolymerisate (vorzugsweise mit Vinylacetatgehalten von $\geqslant 50$ Gew.-%).

Mit Vinylchlorid copolymerisierbare Verbindungen sind z. B. Vinylester mit 1-8 C-Atomen im Alkylrest der Carbonsäure wie Vinylacetat, Vinylpropionat, Alkylacrylate, Alkylmethacrylate, Alkylvinylether, Propylen, Maleinsäureanhydrid, Halbester und Diester der Maleinsäure mit aliphatischen Alkoholen mit 1-8 C-Atomen im Alkolrest.

ABS-Polymerisate im Sinne der Erfindung sind Pfropfprodukte, die hergestellt werden durch Pforpfpolymerisation von

1) 30-95 Gew.-Teilen, vorzugsweise 60-95 Gew.-Teilen eines Monomergemisches aus Styrol, Methylmethacrylat oder α-Methylstyrol, einzeln oder in Abmischungen und Acrylnitril im Gew.-Verhältnis 90 : 10 bis 60 : 40, vorzugsweise 75 : 25 bis 65 : 35 (besonders bevorzugt sind Monomergemische, die kein Methylmethacrylat enthalten), auf

2) 70-5 Gew.-Teilen, vorzugsweise 5-40 Gew.-Teilen eines Butadien-Homo- oder -Copolymerisates

mit einem Comonomeranteil $\leqslant$ 35 Gew.-%, welches einen Gelgehalt $\geqslant$ 50 %, vorzugsweise $\geqslant$ 80 % aufweist, wobei der eigentliche Pfropfkautschuk eine mittlere Teilchengröße von 0,05-5 µm (vorzugsweise 0,1-0,5 µm) ($d_{50}$-Werte) besitzt. (Besonders bevorzugt sind ABS-Pfropfprodukte auf hochvernetzte Butadienhomopolymerisate einer Teilchengröße von 0,3-0,5 µm).

Harzartige, thermoplastische Copolymerisate im Sinne der Erfindung sind Styrol-Acrylnitril-Copolymerisate bzw. Methylmethacrylat-Acrylnitril-Copolymere, die einen Staudinger-Index [$\eta$] von $\geqslant$ 3, vorzugsweise $\geqslant$ 4 dl/g aufweisen. Die Staudinger-Indices dieser Thermoplastkomponente sind höher als die Staudinger-Indices der im Grundpolymeren B) enthaltenen Copolymeriste (d. h. der im ABS-Pfropfcopolymer enthaltenen Harzkomponenten).

Bevorzugt sind Methylmethacrylat-Acrylnitril-Copolymere als Komponente C) mit 5-50 Gew.-% eingebautem Acrylnitril, besonders bevorzugte Polymere C) bestehend aus 15-40 Gew.-% Acrylnitril und 85-60 Gew.-% Methylmethacrylat. Sie besitzen einen unvernetzten Aufbau (erkenntlich an ihrer Löslichkeit in geeigneten org. Lösungsmitteln, (z. B. Dimethylformamid). Diese Copolymere können gegebenenfalls kleinere Anteile von Methacrylsäureester von $C_2$-$C_8$-Alkoholen sowie Acrylsäureester von $C_1$-$C_6$-Alkoholen eingebaut enthalten.

Ethylencopolymerisat im Sinne der Erfindung sind Copolymere mit $\geqslant$ 50 Gew.-% eingebautem Vinylacetat oder Acrylsäureestern mit 1-10, vorzugsweise 2-6 C-Atomen im Alkoholanteil. Die Ethylen-Vinylacetat-Kohlenmonoxid-Terpolymere können gegebenenfalls kleine Mengen von oben genannten Acrylsäureestern zusätzlich eingebaut enthalten. Diese Ethylencopolymere sollen Molekulargewichte $\geqslant$ 1 500 aufweisen und unvernetzt sein. Besonders geeignete Ethylencopolymerisate besitzen Molekulargewichte $\geqslant$ 30 000, insbesondere $\geqslant$ 100 000. Ganz besonders geeignet sind Ethylen-Vinyl-acetat-Copolymere mit Vinylacetatgehalten von 40-70 Gew.-%.

Die Butadiencopolymerkautschuke E) im Sinne der Erfindung stellen teilvernetzte Copolymere mit 10-35 Gew.-%, vorzugsweise 20-35 Gew.-%, eingebautem Acrylnitril dar. Besonders geeignete Kautschuke weisen z. B. 26-34 Gew.-% Acrylnitril auf besitzen eine Mooney-Viskosität (ML4, 100 °C) nach DIN 53 523) von 70-130, vorzugsweise von 70-100, und haben einen Gelgehalt $\geqslant$ 70.

Die Polyesterpolyurethane F) im Sinne der Erfindung sind bekannt (z. B. DE-PS 1 193 241). Sie enthalten als Aufbaukomponente Mischpolyester (mit Molekulargewichen $\geqslant$ 600, vorzugsweise $\geqslant$ 1 000) aus mindestens zwei mehrwertigen Alkoholen und Polycarbonsäuren (z. B. Dicarbonsäuren wie Adipinsäure, Sebazinsäure, Acelainsäure). Geeignete Alkohole sind z. B. Hexandiol, Neopentylglykol, Propylenglykol usw. Die zum Aufbau des Polyesterpolyurethans geeigneten Isocyanate sind vorzugsweise aliphatische Polyisocyanate wie Alkylendiisocyanate, Hexamethylendiisocyanat und aromatische Polyisocyanate wie Xylylendiisocyanate gegebenenfalls in Kombination mit bekannten Kettenverlängerungsmitteln. Besonders bevorzugte Polyesterpolyurethane enthalten als Polyesterbaustein Produkte, die Adipinsäure, Hexandiol und Neopentylglykol gleichzeitig enthalten. Die geeigneten Polyesterurethane besitzen normalerweise Kautschukcharakter.

Die Komponenten D, E und F der erfindungsgemäßen Formmassen können auch dann zur Herstellung der erfindungsgemäßen Formmassen verwendet werden, wenn sie als spezielle Pfropfpolymere vorliegen (Pfropfpolymere von den die Komponente A bildenden Vinylchloridpolymeren auf die Polymere D, E oder F als Pfropfgrundlage).

Die erfindungsgemäß geeigneten Vinylchloridpolymerisate können nach bekannten technischen Verfahren hergestellt werden, z. B. durch Emulsions-, Suspensions-, bzw. Masse-Polymerisationsprozesse.

Zur Herstellung der geeigneten ABS-Polymerisate können Verfahren wie Emulsions-, Suspensions- oder Fällungspolymerisationsprozesse herangezogen werden. Besonders geeignete Prozesse sind Emulsionspolymerisationen oder Kombinationen aus Emulsions- und Suspensionspolymerisationen. Besonders bevorzugte ABS-Polymerisate werden erhalten, indem man in einer ersten Stufe einen Butadien-(copolymer)-Kautschuk in wäßriger Emulsion (in Anwesenheit von Emulgatoren, Radikalbildnern, Reglern etc.) zu einem wäßrigen Latex einer Latexteilchengröße von ca. 0,05-5 µm polymerisiert (d. h. herstellt) (gegebenenfalls in Kombination mit bekannten Latexteilchenagglomerationsverfahren) und in Gegenwart dieses Kautschuklatex die genannten Vinylmonomeren polymerisiert.

Im Anschluß an solche Pfropfpolymerisationen werden Stabilisatoren (z. B. vom Phenoltyp) zugesetzt.

Aus ABS-Pfropfpolymerlatices lassen sich die Polymerisate nach bekannten Verfahren isolieren z. B. durch Koagulation durch Elektrolyte oder organischen Lösungsmitteln. Ein Trockenspinnverfahren bekannter Art schließt sich an.

Die geeigneten Thermoplastzusätze C) können durch Emulsions- oder Suspensionsverfahren in Gegenwart bekannter oberflächenaktiver Substanzen und Initiatoren (z. B. Radikalbildnern) hergestellt werden. Man kann solche Polymere entweder aus der anfallenden Latexform isolieren (z. B. durch Sprühtrocknung oder Elektrolytkoagulation) oder die anfallenden Latices werden mit anderen Latices der erfindungsgemäßen Kompositionsbestandteile vermischt und gemeinsam koaguliert.

Solche sogenannten Co-Koagulations-Verfahren führen zu Komponentenmischungen, die zu Formmassen mit besonders guten Eigenschaften führen, z. B. verbessertes Verarbeitungsverhalten der erfindungsgemäßen Kompositionen).

4

Die Herstellung der geeigneten Ethylen-Polymerisate D) ist bekannt (vergl. z. B. DAS 1 126 613, 1 126 614). Geeignete Verfahren sind beispielsweise eine Lösungspolymerisation in organische Medien (z. B. t-Butanol), eine Masse-Hochdruckpolymerisation oder eine Emulsions- bzw. Fällungspolymerisation. Besonders geeignete Ethylen-Polymerisate werden durch Lösungspolymerisationen bzw. Suspensionspolymerisation erhalten. Je nach Polymerisationsverfahren kann die Aufarbeitung und Isolierung der Polymerisate unterschiedlich erfolgen, z. B. durch direkte Abfiltration, Koagulation, Ausdampfungsprozesse aus Lösung usw.

Zur Herstellung der erfindungsgemäßen Formmassen lassen sich die Polymerisate D) als solche einsetzen, z. B. als Pulver, Granulate oder hochviskose Schmelzen oder Öle. Ein besonders günstiges Verfahren besteht darin, Komponenten aus D) mit z. B. B), C), E) und/oder gegebenenfalls F) herzustellen und diese zur Herstellung der erfindungsgemäßen Massen einzusetzen.

Die Butadien-Acrylnitril Kautschuke E) werden durch Emulsionspolymerisation im Temperaturbereich von 0-80 °C, vorzugsweise 15-60 °C, hergestellt. Sie werden aus den Emulsionen nach bekannten Verfahren isoliert. Die Kautschuke können durch Mahlverfahren (inklusive Oberflächenbepuderung) oder durch andere bekannte Pulverherstellmethoden in teilchenförmige Form überführt werden und als Komponente der erfindungsgemäßen Formmassen Verwendung finden.

Zur Herstellung der Polyurethane F) eignet sich z. B. das Verfahren gemäß DE-PS 1 193 241.

Die erfindungsgemäßen Formmassen können nach üblichen Methoden der Kunststoffverarbeitung beispielsweise durch Spritzguß, Extrusion, Hohlkörperblasen, Tiefziehen, Kalandrieren verarbeitet werden. Sie eignen sich vorzugsweise zur Weiterverarbeitung zu Folien.

Wie aus den nachfolgenden Beispielen hervorgeht, besitzen diese Folien ein wesentlich verbessertes Alterungsverhalten, wenn man Weichmacher mit niedriger oder mittlerer Molekulargewichten durch spezielle Ethylencopolymerisate unter Einhaltung der erfindungsgemäßen Formmassenrezeptur substituiert (s. Vergleich Beispiel 1 mit Beispiel 2).

Dieser Effekt wird besonders deutlich, wenn man erfindungsgemäße Formmassen die geeignete hochmolekulare Ethylen-Vinyl-acetat-Copolymeren enthalten, mit Formmassen vergleicht, die als hochpolymeren Weichmacher z. B. Adipatcarbonatmischester (gemäß EP-A 0 005 736, Beispiel 8) enthalten. Obwohl solche bekannten Adipatcarbonatmischester hochpolymer sind und mit PVC, auch gegebenenfalls in Kombination mit Butadien-Acrylnitril-Kautschuk oder Polyurethanweichmacher oder Ethylencopolymerisaten, wertvolle Weich-PVC-Blends ergeben, erreichen diese nicht die Qualitäten (Dehnung und Dehnung nach Alterung und Zugfestigkeit) der erfindungsgemäßen Formmassen.

Die Grenzviskositäten (Staudinger-Indices) wurden in dem jeweils angegebenen Lösungsmittel bestimmt.

(Zur Definition von Staudinger-Index und Gelgehalt siehe M. Hoffmann, H. Krömer, R. Kuhn, « Polymeranalytik I und II » Georg-Thieme Verlag, Stuttgart (1977).

Die Pfropfkautschukteilchengrößen sind $d_{50}$-Werte (Durchmesser) (Zur Definition siehe Ultrazentrifugen-Messungen : W. Scholtan, H. Lange, Kolloidz. und Z. Polymere 250 (1972) 783-796).

## Beispiele

Zur Herstellung der in Tabelle 2 beschriebenen Formmassen werden Gew.-Teile Polyvinylchlorid (K-Wert 70) mit unterschiedlichen Mengen verschiedener Produkte (Tabelle 1) kombiniert. Als notweniger Stabilisator- und Gleitmittelzusatz werden in jedem Fall 2 Gew.-% BaCd-Laurat (fest), 0,3 Gew.-% sterisch gehindertes, phenolisches Antioxidans (fest) und 0,2 Gew.-% Esterwachs zugesetzt. Die Formmassen werden auf einem Mischwalzwerk 10 min. bei 180 °C homogenisiert und bei 190 °C zu Prüfkörpern verpreßt.

## Tabelle 1 : Eingesetzte Polymerisate

Produkt 1.1

Mischung aus 94 Gew.-Teilen eines ABS-Polymerisates und 6 Gew.-Teilen eines Methylmethacrylat-Acrylnitril-Copolymerisates, enthaltend 32 Gew.-% Acrylnitril, mit einem Staudinger-Index von 5 dl/g (in Dimethylformamid bei 25 °C ; das ABS-Polymerisat, hergestellt durch Emulsionspolymerisation, enthält 30 Gew.-% Polybutadien mit einem Gelgehalt von ≥ 70 % und einer Teilchengröße von 0,4 μm.

Produkt 1.2

Das Polymerisat besteht aus 70 Gew.-% Vinylacetat und 30 Gew.-% Ethylen und besitzt ein durchschnittliches Molekulargewicht von 200 000.

Produkt 1.3

Das Polymer steht aus 6 Gew.-% Kohlenmonoxid, 24 Gew.-% Vinylacetat und 70 Gew.-% Ethylen und besitzt ein durchschnittliches Molekulargewicht von 150 000.

Produkt 1.4

Das Polymerisat besteht aus 29 Gew.-% Acrylnitril und 71 Gew.-% Butadien, besitzt eine Mooney Viskosität ML4 ≥ 50 dar und weist einen Gelgehalt von ≥ 60 % auf.

Produkt 1.5

Das Polymerisat wurde hergestellt durch Umsetzung von Adipinsäure-Hexandiol-Neopentyl-glykolpolyesterdiolen (MG ca. 2 000), Diisocyanat und aliphatischen Diamin als Kettenverlängerungsmittel.

Produkt 1.6

Der Adipincarbonatmischester wurde hergestellt durch Umsetzung von Adipinsäure-Hexandiol-Neopentyl-glykol-polyesterdiol (MG ca. 2 000) mit Diphenylcarbonat und weist ein Molekulargewicht von ca. 150 000 auf.

Tabelle 2

| | Beispiel 1 (Vergleich) | | Beispiel 2 | | Beispiel 3 | | Beispiel 4 | | Beispiel 5 (Vergleich) | |
|---|---|---|---|---|---|---|---|---|---|---|
| | Prod. | Gew.-Tl.** | Prod. | Gew.-Tl. | Prod. | Gew.-Tl. | Prod. | Gew.-Tl. | Prod. | Gew.-Tl. |
| | PVC | 36 | PVC | 30 | PVC | 30 | PVC | 30 | PVC | 25 |
| | 1.1 | 36 | 1.1 | 45 | 1.1 | 45 | 1.1 | 45 | 1.1 | 50 |
| | DIDP* | 18 | 1.2 | 30 | 1.2 | 25 | 1.3 | 28 | 1.6 | 25 |
| | 1.4 | 10 | 1.4 | 10 | 1.5 | 5 | 1.4 | 10 | 1.4 | 10 |
| | | | | | 1.4 | 10 | | | | |
| Zugfestigkeit MPa DIN 53455 | | 22,3 | | 23,0 | | 20,4 | | 22,0 | | 17,5 |
| Dehnung % DIN 53455 | | 230 | | 310 | | 192 | | 255 | | 110 |
| Vicat-Wert °C DIN 53460 Verfahren A | | 80 | | 79 | | 75 | | 75 | | 84 |
| Shore Härte D DIN 53505 | | 51 | | 52 | | 50 | | 52 | | 53 |
| Weiterreißfestigkeit N/mm DIN 53515 | | 83 | | 68 | | 80 | | 65 | | 88 |
| Dehnung nach % Alterung (120 °C, 21) DIN 53455 | | 4 | | 120 | | 115 | | 100 | | 35 |

* Diisodecyphthalat.
** Gewichtsteile.

Aus der Tabelle 2 wird ersichtlich, daß Formmassen, welche einen Weichmacher mit kleineren Molekulargewicht als DIDP enthalten nach Alterung ein stark reduziertes mechanisches Eigenschaftsniveau aufweisen (Dehnung nach Alterung (Vergleich Bsp. 1, 5 mit Bsp. 2-4)). Durch Substition des Weichmachers durch spezielle Ethylencopolymerisate werden Formmassen erhalten, die in jedem Fall ein verbessertes Alterungsverhalten aufweisen.

Vergleicht man Formmassen, in welchen hochmolekulare PVC-Modifikatoren vom Typ der Adipatcarbonatmischester verwendet werden, so findet man trotz deren hoher Molekulargewichte ein ingesamt unbefriedigendes mechanisches Niveau (Dehnung nach Alterung) im Vergleich zu den erfindungsgemäßen Polymerisatkompositionen.

**Patentansprüche**

1. Thermoplastische Formmassen, bestehend aus :
   A) 25-50 Gew.-Teile eines Vinylchloridhomo- oder copolymerisates,
   B) 25-50 Gew.-Teile eines ABS-Polymerisates, hergestellt durch Pfropfpolymerisation von
      1) 30-95 Gew.-Teilen eines Monomeren-Gemisches aus Styrol, Methylmethacrylat, α-Methylsty-

6

rol, einzeln oder in Abmischung einerseits und Acrylnitril andererseits im Verhältnis 90 : 10 bis 60 : 40 auf

2) 70-5 Gew.-Teilen eines Butadien-Homo- oder Copolymerisates, wobei

3) der resultierende gepfropfte Kautschuk eine mittlere Teilchengröße von 0,05-5 μm aufweist,

C) 0-10 Gew.-Teile eines harzartigen, thermoplastischen Copolymerisates aus einem Styrol-Acrylnitril- bzw. Methylmethacrylat-Acrylnitril-Copolymeren, das einen Staudinger-Index [η] von ≥ 3 dl/g, besitzt und dessen [η]-Wert in jedem Fall über dem des im Grundpolymeren B) enthaltenden Copolymerisates liegt,

D) 5-40 Gew.-Teile eines Ethylen-Vinylacetat- mit einem Gehalt an Vinylacetat ≥ 50 gew% oder eines Ethylen-$C_1$-$C_{10}$ Acrylester-Copolymerisates oder eines Ethylen-Vinylacetat-Kohlenmonoxid-Terpolymerisates mit einem Gehalt an Vinylacetat ≥ 20 gew.%, wobei die Polymerisate mittlere Molekulargewichte ≥ 1 500 haben,

E) 3-30 Gew.-Teile einer Butadien-Acrylnitril-Copolymerisat-Kautschukkomponente, die einen Acrylnitrilgehalt von 10-35 gew.% und Gelgehalt von ≥ 60 % hat,

F) 0-15 Gew.-Teile eines Polyesterpolyurethans auf der Basis von aliphatischen Polyestern und Polyisocyanten mit einem Molekulargewicht ≥ 600, wobei gegebenenfalls die die Komponente A bildenden Vinylchloridpolymeren auf die Polymere D, E oder F als Pfropfgrundlage gepfropft sein können.

2. Formmassen gemäß Anspruch 1, dadurch gekennzeichnet, daß

a) als Komponente B) ein Pfropfprodukt angewendet wird, das hergestellt wird durch die Copolymerisation von 60-95 Gew.-Teilen einer Styrol-Acrylnitril-Monomermischung (im Gew.-Verhältnis 75 : 25 bis 65 : 35) in Gegenwart von 40-5 Gew.-Teilen eines Polybutadienlatex bzw. Butadien-Styrol-70 : 30 Copolymerisatlatex, der eine mittlere Teilchengröße im Bereich von 0,1-0,5 μm aufweist und dessen Gelgehalt ≥ 50 % ist, und

b) die Komponente C) ein Copolymerisat aus 95-50 Gew.-% Methylmethacrylat und 5-50 Gew.-% Acrylnitril ist.

3. Formmassen gemäß Anspruch 1), dadurch gekennzeichnet, daß als Komponente C) ein Ethylen-Vinylacetat-Copolymerisat mit einem mittleren Molekulargewicht ≥ 1 500 und einem Vinylacetatgehalt > 60 Gew.-% Anwendung findet.

4. Verwendung von thermoplastischen Formmassen nach Anspruch 1 zur Herstellung von Folien.

## Claims

1. Thermoplastic moulding compositions consisting of :

A) 25-50 parts by weight of a vinyl chloride homo- or copolymer,

B) 25-50 parts by weight of an ABS polymer produced by graft polymerisation of

1) 30-95 parts by weight of a monomer mixture of styrene, methyl methacrylate, α-methylstyrene, either individually or in admixture, on the one hand, and acrylonitrile, on the other hand, in a ratio of 90 : 10 to 60 : 40 on to

2) 70-5 parts by weight of a butadiene homo- or copolymer,

3) the resulting grafted rubber having an average particle size of 0.05-5 μm,

C) 0-10 parts by weight of a resin-like, thermoplastic copolymer of a styrene/acrylonitrile or methyl methacrylate/acrylonitrile copolymer which has a Staudinger index [η] of ≥ 3 dl/g and the [η] value of which is in any case higher than that of the copolymer contained in the basic polymer B),

D) 5-40 parts by weight of an ethylene/vinyl acetate copolymer with a content of vinyl acetate of ≥ 50 % by weight or of an ethylene/$C_1$-$C_{10}$ acrylic ester copolymer or of an ethylene/vinyl acetate/carbon monoxide terpolymer with a content of vinyl acetate of ≥ 20 % by weight, the polymers having average molecular weights of > 1 500,

E) 3-30 parts by weight of a butadiene/acrylonitrile copolymer rubber component which has an acrylonitrile content of 10-35 % by weight and a gel content of ≥ 60 %, and

F) 0-15 parts by weight of a polyester polyurethane based on aliphatic polymers and polyisocyanates with a molecular weight of ≥ 600,
it being possible for the vinyl chloride polymers forming component A optionally to be grafted on to polymers D, E or F as the graft base.

2. Moulding compositions according to Claim 1, characterised in that

a) a graft product which is produced by copolymerising 60-95 parts by weight of a styrene/acrylonitrile monomer mixture (in a weight ratio of 75 : 25 to 65 : 35) in the presence of 40-5 parts by weight of a polybutadiene latex or butadiene/styrene 70 : 30 copolymer latex which has an average particle size in the range of 0.1-0.5 μm and the gel content of which is ≥ 50 %, is used as component B), and

b) component C) is a copolymer of 95-50 % by weight of methyl methacrylate and 5-50 % by weight or acrylonitrile.

3. Moulding compositions according to Claim 1), characterised in that an ethylene/vinyl acetate copolymer with an average molecular weight of ≥ 1 500 and a vinyl acetate content of > 60 % by weight is used as component C).

4. Use of thermoplastic moulding compositions according to Claim 1 for the production of films.

**Revendications**

1. Matières à mouler thermoplastiques consistant en :

A) 25 à 50 parties en poids d'un homo- ou co-polymère du chlorure de vinyle,

B) 25 à 50 parties en poids d'un polymère ABS préparé par polymérisation greffée de

1. 30 à 95 parties en poids d'un mélange de monomères consistant en styrène, méthacrylate de méthyle, alpha-méthyl-styrène, isolément ou en mélange, d'une part, et acrylonitrile d'autre part, dans des proportions relatives de 90 : 10 à 60 : 40, sur

2. 70 à 5 parties en poids d'un homo- ou co-polymère du butadiène,

3. Le caoutchouc greffé obtenu ayant une dimension de particule moyenne de 0,05 à 5 $\mu$m ;

C) 0 à 10 parties en poids d'un copolymère thermoplastique résineux consistant en un copolymère styrène-acrylonitrile ou méthacrylate de méthyle-acrylonitrile, ayant un indice de Staudinger [$\eta$] supérieur ou égal à 3 dl/g et qui, dans tous les cas, est supérieur à celui du copolymère contenu dans le polymère de base B

D) 5 à 40 parties en poids d'un copolymère éthylène-acétate de vinyle à une teneur en acétate de vinyle supérieure ou égale à 50 % en poids ou d'un copolymère éthylène-ester acrylique en $C_1$-$C_{10}$ ou d'un copolymère ternaire éthylène-acétate de vinyle-oxyde de carbone à une teneur en acétate de vinyle supérieure ou égale à 20 % en poids, les polymères ayant des poids moléculaires moyens supérieurs ou égaux à 1 500,

E) 3 à 30 parties en poids d'un composant caoutchouc copolymère butadiène-acrylonitrile à une teneur en acrylonitrile de 10 à 35 % en poids et une teneur en gel supérieure ou égale à 60 %,

F) 0 à 15 parties en poids d'un polyester-polyuréthanne à base de polyesters aliphatiques et de polyisocyanates, à un poids moléculaire moyen supérieur ou égal à 600,

les polymères du chlorure de vinyle formant le composant A pouvant le cas échéant être greffés sur les polymères D, E et F servant de supports de greffage.

2. Matières à mouler selon la revendication 1, caractérisées en ce que

a) on utilise en tant que composant B) un produit de greffage qui a été préparé par copolymérisation de 60 à 95 parties en poids d'un mélange de monomères consistant en styrène et acrylonitrile (à des proportions relatives en poids de 75 : 25 à 65 : 35) en présence de 4 à 5 parties en poids d'un latex de polybutadiène ou d'un latex de copolymère butadiène-styrène, 70 : 30, ayant une dimension de particule moyenne dans l'intervalle de 0,1 à 0,5 $\mu$m, et dont la teneur en gel est supérieure ou égale à 50 %, et

b) le composant C) est un copolymère de 95 à 50 % en poids de méthacrylate de méthyle et de 5 à 50 % en poids d'acrylonitrile.

3. Matières à mouler selon la revendication 1, caractérisées en ce que l'on utilise en tant que composant C) un copolymère éthylène-acétate de vinyle ayant un poids moléculaire moyen supérieur ou égal à 1 500 et une teneur en acétate de vinyle supérieure à 60 % en poids.

4. Utilisation des matières à mouler thermoplastiques selon la revendication 1 pour la préparation de feuilles.